# EUROPEAN PATENT SPECIFICATION

(11) **EP 2 089 138 B1**
(45) Date of publication and mention of the grant of the patent: **15.01.2014**
(21) Application number: 07834811.7
(22) Date of filing: 21.11.2007
(51) Int. Cl.: B01D 53/14, B01D 53/18, C01B 31/20

(54) **IMPROVED ABSORBENT REGENERATION**
VERBESSERTE ABSORPTIONSMITTELREGENERATION
AMÉLIORATIONS APPORTÉES À LA RÉGÉNÉRATION D'UN ABSORBANT

(30) Priority: 24.11.2006 NO 20065411
(43) Date of publication of application: 19.08.2009
(73) Proprietor: Aker Engineering & Technology AS, 1326 Lysaker (NO)
(72) Inventor: WOODHOUSE, Simon, 2010 Strømmen (NO); RUSHFELDT, Pål, 0678 Oslo (NO)
(74) Representative: Balle, Morten
(86) International application number: PCT/NO2007/000411
(87) International publication number: WO 2008/063079

(56) References cited:
- EP-A- 1 543 874
- CA-A1- 2 559 744
- GB-A- 2 195 916
- US-A- 4 160 810

## Description

### Technical field

The present invention relates to the field of CO₂ capture from a gas mixture. More specifically the present invention relates to CO₂ capture from a CO₂ containing gas, such as combustion gas from combustion of carbonaceous material or from other CO₂ liberating processes. Most specifically the present invention relates to an improved method and plant for regeneration of a CO₂ absorbent in a method and plant for capturing of CO₂.

### Background

The continually increasing combustion of fossil fuel, such as coal, natural gas and oil, during the last centuries has resulted in an increase in the concentration of CO₂ in the atmosphere. The increasing concentration of CO₂ has caused concern due to the greenhouse effect caused by CO₂. The greenhouse effect is suspected already to have caused at least some of the changes in the climate that have been seen during the last decades, and is according to simulation models suspected to cause even more and potentially dramatic changes in the climate of planet earth.

This has caused a call for action from scientists, environmentalists and politicians throughout the world, to stabilize or even reduce the discharge of CO₂ from combustion of fossil fuel to the atmosphere. This may be achieved by capturing and safe depositing of CO₂ from the exhaust gas from thermal power plants and other plants where fossil fuel is combusted.

The captured CO₂ may be injected in sub terrain formations such as aquifers, oil wells for enhanced oil recovery or in depleted oil and gas wells for deposition. Tests indicate that CO₂ remains in the sub terrain formation for thousands of years and is not released into the atmosphere.

Capturing of CO₂ from a gas by means of absorption is well known and has been used for decades, e.g. for removal of CO₂ (and other acid gases) from produced natural gas at gas fields. The absorbents used or suggested in the prior art have been different aqueous alkaline solutions, such as potassium carbonate, see e.g. US5.528.811, and different amines, see e.g. US 4.112.051, US 4.397.660 and US 5.061.465. Separation of CO₂ from exhaust gas from thermal power plants by means of an amine solution, is known e.g. from US 4.942.734.

Common for these CO₂ capturing solution is that the gas mixture to be separated is introduced countercurrent to the aqueous adsorbent in an absorber column. The gas leaving the absorber column is CO₂ depleted (or acid gas depleted), whereas the CO₂ (or other acid gas) leaves the absorber column together with the absorbent. The absorbent is regenerated in the regenerator column and returned to the absorber column. Amine is regenerated by stripping the amine solution with steam in the regeneration column. The steam is generated in the reboiler at the base of the column.

As illustrated above CO₂ as such is well known in the art. However, there is a need for several improvements in the CO₂ capturing process to make CO₂ free or low CO₂ emission thermal power plants economically profitable.

The plants for capturing of CO₂ are relative large, complex and expensive constructions. It is therefore desired to reduce the size, complexity and cost of the plants.

Capturing of CO₂ is carried out at the expense of the efficiency of a thermoelectric power plant utilizing fossil fuel, so that the output of electrical power and/or medium temperature heat from a thermoelectric power plant is reduced. The reduced efficiency compared with a traditional plant makes these facilities less profitable. Improvements in the efficiency, i.e. reducing the energy cost in the CO₂ capturing process, are therefore sought.

The currently preferred absorbents are aqueous solutions of different amines. The commonly used amines are alkanol amines, such as e.g., diethanol amine, mono methyl ethanolamine, aminoethyl ethanolamine, 2-(Metylamino)etanol, MDEA as well as other amines known by skilled man in the art. The absorption of CO₂ to the amine absorbents is a reversible, exothermic reaction. Accordingly, heat has to be supplied to the regenerator column to reverse the absorption and release the CO₂.

The heat supplied to the regenerator column according to the state of the art, is supplied in reboiler where the absorbent is heated to a temperature typically from about 120 to 130 °C. The absorbent in the reboiler may be heated by an electrical heat source but most commonly by a heat medium, such as e.g. medium temperature steam. The reboiler is the main consumer of medium temperature heat energy in the absorption / desorption cycle for CO₂ capturing. A reduction in the demand for medium temperature heat energy would improve the economy of the CO₂ capturing process.

GB 2.195.916 and US 4,160,810 both describe cooling of the lean absorbent leaving the regenerator by flashing and is split in a liquid stream that is introduced into the absorber, and a gaseous phase that is reintroduced into regenerator. The pressure of the gaseous phase is boosted either by means of an ejector as described in GB 2.195.916, or by means of a compressor as described in US 4,160,810.

EP 1.736.231 relates to an apparatus and method for recovering CO₂ from a gas mixture having a basic configuration according to the principles described above. Two heat exchangers are provided for heating the rich absorber before introduction into the regenerator, a first heat exchanger heating the rich absorbent against lean absorbent from the regenerator, and a second heat exchanger, heating the rich absorbent further against condensate from the reboiler. The use of the condensate from the reboiler to heat the rich absorbent reduces the heat loss from the heating of the reboiler as a greater part of the heat in the steam for the reboiler, is utilized.

Both CA 2.559.744 and EP 1.543.874 describe methods and plants for CO₂ capture where CO₂ is captured from a CO₂ containing gas by countercurrent flow to a liquid absorbent in an absorber, to produce a rich absorbent, and where the rich absorbent is stripped against steam in a regenerator to release CO₂ that is treated further, and to regenerate liquid absorbent that is recycled as regenerated or lean absorbent to the absorber. The rich absorbent to be regenerated is heated against lean absorbent leaving the absorbent in a heat exchanger.

The heat loss in the absorption and regeneration cycle of the CO₂ capturing process, is, however, still too high and improved plants and methods are still sought.

An objective for the present invention is thus to obtain a reduction in the reboiler duty, and thus a reduction in the demand for medium temperature energy, such as medium temperature steam.

### Short description of the invention

According to a first aspect, the present invention provides for a method for regeneration of a rich absorbent having absorbed CO₂, to give a regenerated, or lean absorbent, and CO₂, the method comprising the steps of
a) introducing a stream of rich absorbent into a regeneration column in which the absorbent flows downwards and countercurrent with steam generated by heating lean absorbent in a reboiler at the base of the regeneration column,
b) withdrawing released CO₂ and steam from the top of the column and separation of the withdrawn CO₂ and steam to give a stream of CO₂ that is removed, and condensed water that is recycled into the regeneration column,
c) withdrawing lean, or regenerated, absorbent from the base of the column,
d) flashing the withdrawn lean absorbent to produce a gaseous phase that is compressed and reintroduced into the regeneration column, and a liquid lean absorbent phase,
e) heating the rich absorbent by a first heat exchanging against the liquid flashed lean absorbent,
f) heating of the rich absorbent after being heat exchanged against the lean absorbent by heat exchanging against a heat medium having an inlet temperature lower than 130 °C, and
introducing the heated rich absorbent into the regeneration column.. The combination of flashing of the lean absorbent leaving the regenerator, compressing the gaseous phase, introduction of the compressed gaseous phase into the regenerator as steam for stripping of absorbent, and further cooling the liquid phase after flashing against the rich absorbent before introduction into the regenerator, reduces the heat loss in the regenerator by recycling more of the heat energy back to the regenerator. Additionally, the liquid phase after flashing, or the lean absorbent to be returned to the absorber, is additionally cooled, which is advantageous for the absorption process. The combination also enables better use of low temperature heat. The combined effect of this process design is that the temperature profile in the column is improved and that heat normally transferred from lean amine to rich amine is maintained at the base of the stripper. The total result is an improved efficiency of the capturing process and an improved energy balance of the system.

According to a first embodiment of the first aspect, the compressed gaseous phase is mixed with water to cool and saturate the gaseous phase with steam before introduction into the regeneration column. After compression the gaseous phase normally has a temperature higher than required for introduction into the regeneration column. Introduction of water into the steam both cools the gas and saturates the steam with water to improve the utility of the compressed gaseous phase for regenerating the absorbent.

According to a second aspect, the present invention relates to a method for capturing of CO₂ from a CO₂ containing gas, comprising introduction of a lean liquid absorbent and the CO₂ containing gas into an absorber in which the CO₂ containing gas is caused to flow countercurrent to the lean absorbent to produce a rich absorbent and a stream of CO₂ depleted gas, releasing the CO₂ depleted gas into the surroundings, withdrawing the rich absorbent from the absorber, wherein rich absorbent is regenerated to give a stream of CO₂ and a lean absorbent, as described with reference to the above method for regeneration of a rich absorbent.

According to a third aspect the present invention provides for a regenerator for a liquid absorbent for CO₂ comprising a regeneration column, a rich absorbent line for introduction of rich absorbent into the regeneration column, withdrawal means for withdrawing lean adsorbent from the bottom of the regeneration column, a reboiler for heating of a portion of the withdrawn absorbent before reintroduction into the regeneration column for production of steam that is reintroduced into the column, a lean absorbent line for recycling of a portion of the absorbent withdrawn by withdrawal means to an absorber, a heat exchanger for heating rich absorbent against the withdrawn lean absorbent and a heat exchanger to additionally heat the heated rich absorbent against a low temperature heat source before the rich gas enters the regenerator, a gas withdrawal line for withdrawal of CO₂ and vapor from the top of the regeneration column, and separation means for separating the gas withdrawn from the top of the regeneration column in a CO₂ stream that is exported from the regenerator, and water that is recycled to the regeneration column, wherein it further comprises flashing means, a steam withdrawal line connecting said flashing means with a compressor for compression of a withdrawn gaseous phase, a line for injecting the compressed gaseous phase into the regeneration column, and a lean absorbent line connecting the flashing means with the heat exchanger,
that a de-superheater is arranged between the compressor and the regeneration column, in which de-superheater the compressed steam is cooled and saturated with steam by introduction of water, and that a line is provided from the separation means for leading water from the separation means to the de-superheater.. The combination of flashing means, a compressor for compressing the gaseous phase after flashing, an injection line for injection the compressed gaseous phase into the regenerator, and the lean absorption line for the liquid phase, or lean absorbent line introducing the lean absorbent into the heat exchanger for further cooling of the lean absorbent, and heating of the rich absorbent, results in an improved efficiency of the process and in lower heat loss than for regeneration plants according to the prior art.

According to a forth aspect, the present invention relates to a plant for capturing CO₂ from a CO₂ containing gas, comprising means for introducing a liquid lean absorbent and the CO₂ containing gas into an absorber in which the absorbent and the CO₂ containing gas are caused to flow countercurrent to produce a CO₂ depleted gas flow and a rich absorbent, means for releasing the CO₂ depleted gas flow into the surroundings, mans for withdrawing the rich absorbent and to introduce the rich absorbent into a regenerator as described above.

The term "low temperature heat source" or "low temperature heat medium" as used in the present description, is used to describe a heat source or a heat medium, such as water, steam, or other heat medium, having an outlet temperature from a heat exchanger below approx. 115°C, such as e.g. below 110 °C. The outlet temperature from a heat exchanger for a low temperature heat source may be below 105 °C, below 100 °C or below 95 °C. The inlet temperature into a heat exchanger for a low temperature heat medium may be below 130 °C, such as below 125 °C.

The term "medium temperature heat" or "medium temperature heat medium" as used in the present description, is used to describe a heat source or heat medium, such as water, steam or other heat medium, having an outlet temperature form a heat exchanger above 120 °C, such as above 125 °C or above 130 °C. A medium temperature eat source or heat medium, normally has an inlet temperature to a heat exchanger of above 125 °C, more preferably above 130 °C.

A medium temperature heat medium may be steam at a temperature above 125 °C, or above 130 °C, which is condensed in a heat exchanger to produce condensate water at a temperature that is 1 to 10 °C lower than the inlet temperature of the steam. This condensate water may then be used as a low temperature heat medium for less temperature demanding processes.

The term "CO₂ containing gas" as used in the present description and claims, is any kind of combustion gas or other industrial gas flow including a level of CO₂ that is substantially higher than the level in the atmosphere. Typically, the CO2 containing gas is a combustion gas from a fossil fuel fired power plant.

The term "CO₂ depleted gas" or "CO₂ depleted stream" is used for a gas or gas stream from which a substantial part of the CO₂ has been removed. Typically more than 80 %, more preferred more than 85 % and most preferably more than 90% of the CO₂ introduced in the CO₂ containing gas is removed before the gas is released as a CO₂ depleted gas.

### Short description of the figures

Figure 1 is a schematic diagram of a CO₂ capturing plant according to the state of the art, and
Figure 2 is a schematic diagram of an embodiment of the present improved amine regeneration part of a CO₂ capturing plant.

### Detailed description of the present invention

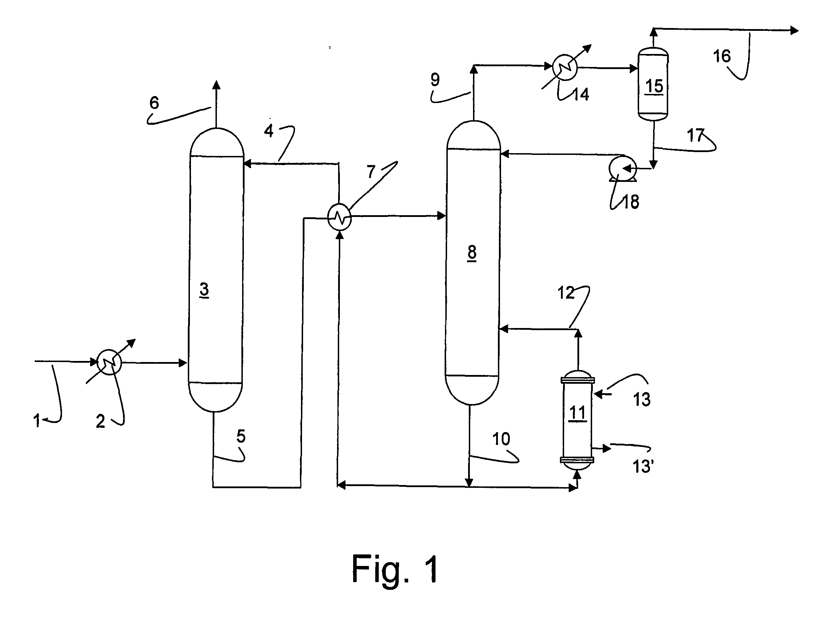

Figure 1 illustrates a CO₂ capturing plant according to the prior art, where exhaust gas from combustion of carbonaceous fuel enters the CO₂ capturing plant through an exhaust line 1. The exhaust gas in line 1 is substantially cooled by utilization of the high temperature heat energy from the combustion for production of electrical energy. The temperature of the exhaust entering the CO₂ capturing plant through line is normally from about 120 °C to about 90 °C. The exhaust gas from line 1 is optionally introduced into a cooling section in which it is saturated with water and cooled to a temperature e.g. from about 35 °C to about 60 °C.

The cooled and humidified exhaust gas is then introduced into the lower part of an absorption tower 3 in which the exhaust gas flows from the bottom to the top of the absorption tower 3 countercurrent to a lean absorbent, i.e. absorbent that is stripped for CO₂, that is introduced into the upper part of the absorption tower through a lean absorbent line 4. Lean gas, i.e. exhaust gas where a substantial part of the CO₂ is removed, is removed through a gas exit line 6 at the top of the absorption tower, whereas rich absorbent, i.e. absorbent having absorbed CO₂, is removed from the absorption tower through a rich absorbent line 5.

The rich absorbent is heated against lean absorbent that is returned to the absorption tower in a heat exchanger 7 to a temperature typically in the range between 90 and 110 °C, before the rich absorbent is introduced into a regeneration column 8. In the regeneration column 8 the rich adsorbent flows downwards, countercurrent to steam generated by heating some of the absorbent in a regeneration reboiler 11. Lean absorbent leaves the regenerator column through a lean absorbent outlet 10. A part of the lean absorbent in the outlet 10 is introduced into the regeneration reboiler 11 where it is heated to a temperature typically in the range between 120 and 130 °C, to produce hot absorbent and steam which is re-introduced into the regenerator column through a line 12. The lean absorbent in the reboiler 11 is typically heated by means of electricity, or a heating medium, such as e.g. steam. When using a heating medium for heating the absorbent in the regeneration reboiler is introduced through a line 13 and removed through a line 13'. Steam as a heat medium for the reboiler is normally introduced as a high pressure steam at a temperature of 130 °C to about 140 °C, and leaves through line 13' as condensed steam at the same temperature. In other words, the energy transferred from the heat medium to the absorbent in the reboiler is the heat of condensation of the steam. The heating of the column from the bottom gives a temperature gradient at steady state from the bottom to the top of the column, where the temperature at the top is from 10 to 50 °C lower than at the bottom, depending on the actual design of the column. In a typical regeneration column the temperature at the bottom of the column is about 120 °C and the temperature at the top of the column is about from 10 to 50 °C lower than at the bottom of the column.

The lean absorbent in line 10 that is not introduced into the regeneration reboiler, is recycled back to the absorption column 3 through the line 4 and cooled in the heat exchanger 7 against rich absorbent in the line 5. In the heat exchanger 7 the relatively cold rich absorbent is heated against the relatively hot lean absorbent leaving the stripper at a temperature of about 120 °C. Depending on the actual dimensioning and construction of the plant, the temperature of the rich amine leaving the heat exchanger 7 for the amine stripper may be from about 90 to about 110 °C.

CO₂ released from the adsorbent and water vapor is withdrawn from the regenerator column 8 through a gas withdrawal line 9. The gas in the gas withdrawal line 9 is cooled in a reflux condenser 14 to condense water that is separated from the remaining gas, mainly comprising CO₂ in a CO₂ separator 15. CO₂ gas and some remaining water vapor is removed from the CO₂ separator 15 through a CO₂ line 16 for further treatment, such as drying, compression and deposition. The condensed water in the CO₂ separator is withdrawn through a line 17 and pumped back to the top of the regeneration column 8 by means of a pump 18.

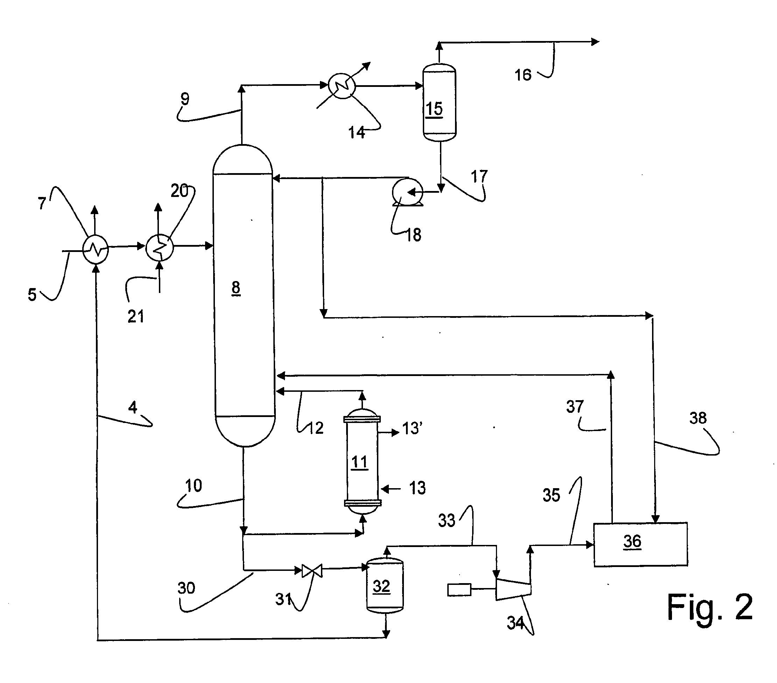

Figure 2 illustrates an embodiment of a regeneration plant according to the present invention, for regeneration of an absorbent, in which a part of the lean absorbent leaving the regeneration column 8 is flashed over a flash valve 31 and flash vessel 32 to give steam that is withdrawn from the flash vessel in a steam line 33, and lean absorbent that is returned to the absorber 3 via line 4. The gas generated in the flash vessel 32 mainly comprises steam and carbon dioxide, to remove more carbon dioxide from the absorbent before it is returned to the absorber.

The steam and CO₂ that is withdrawn through line 33 is then compressed in a compressor 34 to give a compressed, hot, unsaturated vapor in line 35. The steam in line 35 is then cooled and saturated by water in a de-superheater 36 in which water is introduced through a line 38 and mixed with the steam from line 35. The resulting water saturated steam from the de-superheater 36 is then returned and injected into to the stripper 8 through a line 37. The water introduced into the de-superheater may conveniently be a part of the water that is condensed in the separator 15. In the illustrated embodiment, the water in line 38 is withdrawn from line 17, conveniently after the pump 18.

Flashing of the lean absorbent over flash valve 31 and removal of vapor in separator 32, reduces the temperature of the lean absorbent. The rich medium leaving heat exchanger 7 may therefore have a temperature that is lower than the desired temperature for introduction into the regenerator column 8. An optional heat exchanger 20 heated by a low temperature heat medium in line 21, may therefore be provided to heat the rich absorbent to the desired temperature. The low temperature heat medium entering the heat exchanger 20 through line 21, may e.g. be the heat medium leaving the reboiler 11 in line 13'. The heat medium introduced into the reboiler in line 13 is preferably steam, whereas the heat medium leaving the reboiler in line 13' is condensed water.
Compressing the steam in line 33 increases both the temperature and the pressure of the steam, to produce hot, unsaturated vapor. The absorbent can be degraded by a temperature higher than about 130 °C. The water added in the de-superheater 36 ensures that the steam that is introduced into the regeneration column in line 37 is saturated steam having a temperature of 120 - 130 °C.

The term "steam" as used in the present description and claims, is, where appropriate, also intended to include steam that includes other gases, such as e.g. CO₂. By compressing the steam in line 33 and thereby adding heat, the low temperature and low pressure steam in line 33 is converted to medium temperature steam having a utility in the plant. Additionally, low temperature heat from the reboiler may find use in the heat exchanger 20. In a plant according to the state of the art, the low temperature heat medium, such as steam condensate leaving the reboiler, is cooled against water in a heat exchanger, and returned to a boiler for generation of medium temperature steam that is returned to the reboiler. The plant illustrated in figure 2 thus reduces the heat, or enegy loss, from the plant making it more energy efficient.

An exemplary plant according to figure 2 for capturing of CO2 from the exhaust gas of a 400 MW gas fired power station with CO2 removal by MEA has been simulated and key data estimated.

According to the simulated model, the CO2 removal system removes 85% of the CO2 in the exhaust gas. The standard system demonstrated in figure 1 will require an amine regenerator reboiler with a duty of 152 MW. Heat is supplied in the form of saturated steam at 4 bara and 144 °C. Steam condensate leaves the reboiler at 144 °C. In a plant according to a state of the art, the condensate is cooled and pumped back to the power station for generation of steam. The amine regenerator operates at 1.9 bara.

According to the simulation model of the present invention, the lean absorbent is flashed over the valve 31 down to 1.05 bara. The vapor then generated is separated from the liquid and compressed up to 1.95 bara. Water is injected into the vapour to remove the superheat. The vapor is then introduced into the stripper column at the base. The reboiler duty is reduced to 110 MW, a reduction of 42MW. The vapor compressor has a power consumption of 3.3 MW.

The lean absorbent exits the flash vessel at 102 °C. Therefore, the rich amine cannot be heated above 100 °C in the amine/amine exchanger. It is therefore possible to use the steam condensate from the reboiler to heat the rich amine. This will reduce the reboiler duty even more.

Accordingly, the use of the lean amine flash to generate steam according to the present invention, makes it possible to reduce the steam requirement for the regenerator from 152 MW to 110MW and thereby reducing the steam requirement of the regenerator by 28%. Even though this saving is at the cost of an electrical power consumption for compression of 3.3 MW, the savings are significant.

## Claims

1. A method for regeneration of a rich absorbent having absorbed CO₂, to give a regenerated, or lean absorbent, and CO₂, the method comprising the steps of
a) introducing a stream of rich absorbent into a regeneration column (8) in which the absorbent flows downwards and countercurrent with steam generated by heating lean absorbent in a reboiler (11) at the base of the regeneration column (8),
b) withdrawing released CO₂ and steam from the top of the column (8) and separation of the withdrawn CO₂ and steam to give a stream of CO₂ that is removed, and condensed water that is recycled into the regeneration column (8),
c) withdrawing lean, or regenerated, absorbent from the base of the column (8),
d) flashing the withdrawn lean absorbent to produce a gaseous phase that is compressed and reintroduced into the regeneration column (8), and a liquid lean absorbent phase,
e) heating the rich absorbent by a first heat exchanging against the liquid flashed lean absorbent,
f) heating of the rich absorbent after being heat exchanged against the lean absorbent by heat exchanging against a heat medium having an inlet temperature lower than 130 °C, and
g) introducing the heated rich absorbent into the regeneration column (8).

2. The method according to claim 1, wherein the compressed gaseous phase is mixed with water to cool and saturate the gaseous phase with steam before the compressed gaseous phase is introduction into the regeneration column (8).

3. The method according to claim 2, wherein the compressed gaseous phase is cooled to a temperature of 120 to 130 °C before introduction into the regeneration column (8).

4. A method for capturing of CO₂ from a CO₂ containing gas, comprising introduction of a lean liquid absorbent and the CO₂ containing gas into an absorber (3) in which the CO₂ containing gas is caused to flow countercurrent to the lean absorbent to produce a rich absorbent and a stream of CO₂ depleted gas, releasing the CO₂ depleted gas into the surroundings, withdrawing the rich absorbent from the absorber (3), wherein the rich absorbent is regenerated to give a stream of CO₂ and lean absorbent according the method of claim 1.

5. The method according to claim 4, wherein the compressed gaseous phase is mixed with water to cool and saturate the gaseous phase with steam before introduction into the regeneration column (8).

6. The method according to claim 5, wherein the compressed gaseous phase is cooled to a temperature of 120 to 130 °C before introduction into the regeneration column (8).

7. A regenerator for a liquid absorbent for CO₂ comprising a regeneration column (8), a rich absorbent line (5) for introduction of rich absorbent into the regeneration column (8), withdrawal means (10) for withdrawing lean adsorbent from the bottom of the regeneration column (8), a reboiler (11) for heating of a portion of the withdrawn absorbent before reintroduction into the regeneration column for production of steam that is reintroduced into the column, a lean absorbent line (4) for recycling of a portion of the absorbent withdrawn by withdrawal means (10) to an absorber, a heat exchanger (7) for heating rich absorbent against the withdrawn lean absorbent and a heat exchanger (20) to additionally heat the heated rich absorbent against a low temperature heat source before the rich gas enters the regenerator, a gas withdrawal line (9) for withdrawal of CO₂ and vapor from the top of the regeneration column, and separation means (14, 15, 19, 45) for separating the gas withdrawn from the top of the regeneration column in a CO₂ stream that is exported from the regenerator, and water that is recycled to the regeneration column (8), **characterized in** 33 that it further comprises flashing means (31, 32), a steam withdrawal line (33) connecting said flashing means with a compressor (34) for compression of a withdrawn gaseous phase, a line (37) for injecting the compressed gaseous phase into the regeneration column (8), and a lean absorbent line (4) connecting the flashing means with the heat exchanger (7),
that a de-superheater (36) is arranged between the compressor (34) and the regeneration column (8), in which de-superheater (36) the compressed steam is cooled and saturated with steam by introduction of water, and that a line (38) is provided from the separation means (14, 15, 16, 17, 18) for leading water from the separation means to the de-superheater (36)...

8. The regenerator according to claim 7, wherein the flashing means (31, 32) comprises a flash valve (31) and a flash vessel (32).

9. A plant for capturing CO₂ from a CO₂ containing gas, comprising means for introducing a liquid lean absorbent and the CO₂ containing gas into an absorber in which the absorbent and the CO₂ containing gas are caused to flow countercurrent to produce a CO₂ depleted gas flow and a rich absorbent, means for releasing the CO₂ depleted gas flow into the surroundings, means for withdrawing the rich absorbent and to introduce the rich absorbent into a regenerator according to claim 7.

10. The plant according to claim 9, wherein the flashing means (31, 32) comprises a flash valve (31) and a flash vessel (32).

## Patentansprüche

1. Verfahren zum Regenerieren eines gesättigten Absorbens, welches CO₂ absorbiert hat, um ein regeneriertes oder mageres Absorbens und CO₂ zu ergeben, wobei das Verfahren folgende Schritte umfasst:
a) Zuführen eines Stroms von gesättigtem Absorbens in eine Regeneratorsäule (8), in welcher das Absorbens abwärts und im Gegenstrom mit Dampf fließt, welcher durch Erwärmen des mageren Absorbens in einem Verdampfer (11) an der Basis der Regeneratorsäule (8) erzeugt wird,
b) Entnehmen von freigesetztem CO₂ und Dampf am oberen Ende der Säule (8) und Abtrennen des entnommenen CO₂ und Dampfs, um einen Strom von CO₂, welches entfernt wird, und Kondenswasser, welches in der Regeneratorsäule (8) rückgeführt wird, zu ergeben,
c) Entnehmen von magerem oder regeneriertem Absorbens an der Basis der Säule (8),
d) Entspannen des entnommenen mageren Absorbens, um eine Gasphase, welche verdichtet und in die Regeneratorsäule (8) wiedereingeführt wird, und eine flüssige magere Absorbensphase zu erzeugen,
e) Erwärmen des gesättigten Absorbens durch einen ersten Wärmeaustausch mit dem flüssigen entspannten mageren Absorbens,
f) Erwärmen des gesättigten Absorbens nach Wärmeaustausch mit dem mageren Absorbens durch Wärmeaustausch mit einem Heizmedium mit einer Einlasstemperatur geringer als 130°C, und
g) Zuführen des erwärmten gesättigten Absorbens in die Regeneratorsäule (8).

2. Verfahren nach Anspruch 1, wobei die verdichtete Gasphase mit Wasser gemischt wird, um die Gasphase mit Dampf zu kühlen und zu sättigen, bevor die verdichtete Gasphase der Regeneratorsäule (8) zugeführt wird.

3. Verfahren nach Anspruch 2, wobei die verdichtete Gasphase vor Zuführen in die Regeneratorsäule (8) auf eine Temperatur von 120 bis 130°C abgekühlt wird.

4. Verfahren zum Auffangen von CO₂ aus einem CO₂-enthal-tenden Gas, umfassend Zuführen eines mageren flüssigen Absorbens und des CO₂-enthaltenden Gases in einen Absorber (3), in welchem das CO₂-enthaltende Gas veranlasst wird, im Gegenstrom zum mageren Absorbens zu fließen, um ein gesättigtes Absorbens und einen Strom von CO₂-armen Gas herzustellen, Freisetzen des CO₂-armen Gases in die Umgebung und Entnehmen des gesättigten Absorbens vom Absorber (3), wobei das gesättigte Absorbens regeneriert wird, um einen Strom von CO₂ und magerem Absorbens zu ergeben, gemäß dem Verfahren nach Anspruch 1.

5. Verfahren nach Anspruch 4, wobei die verdichtete Gasphase vor Zuführen in die Regeneratorsäule (8) mit Wasser gemischt wird, um die Gasphase mit Dampf zu kühlen und zu sättigen.

6. Verfahren nach Anspruch 5, wobei die verdichtete Gasphase vor Zuführen in die Regeneratorsäule (8) auf eine Temperatur von 120 bis 130°C gekühlt wird.

7. Regenerator für ein flüssiges Absorbens für CO₂, umfassend eine Regeneratorsäule (8), eine Leitung für gesättigtes Absorbens (5) zum Zuführen von gesättigtem Absorbens in die Regeneratorsäule (8), Entnahmemittel (10) zur Entnahme mageren Absorbens vom Boden der Regeneratorsäule (8), einen Verdampfer (11) zum Erwärmen eines Teils des entnommenen Absorbens vor Wiedereinführen in die Regeneratorsäule zum Herstellen von in die Säule wiedereingeführtem Dampf,
eine Leitung für mageres Absorbens (4) zum Rückführen eines Teils des durch Entnahmemittel (10) entnommenen Absorbens zu einem Absorber, einen Wärmetauscher (7) zum Erwärmen von gesättigtem Absorbens mit dem entnommenen mageren Absorbens und einen Wärmetauscher (20) zum zusätzlichen Erwärmen des erwärmten gesättigten Absorbens mit einer Niedertemperatur-Wärmequelle bevor das gesättigte Gas in den Regenerator eintritt, eine Gasentnahmeleitung (9) zum Entnehmen von CO₂ und Dampf am oberen Ende der Regeneratorsäule, und Trennmittel (14, 15, 19, 45) zum Trennen des am oberen Ende der Regeneratorsäule entnommenen Gases in einen CO₂-Strom, welcher vom Regenerator ausgegeben wird, und Wasser, welches in die Regeneratorsäule (8) rückgeführt wird, **dadurch gekennzeichnet, dass** er weiterhin Entspannungsmittel (31, 32), eine Dampfentnahmeleitung (33), welche die Entspannungsmittel und einen Verdichter (34) zum Verdichten einer entnommenen Gasphase verbindet, eine Leitung (37) zum Einspritzen der verdichteten Gasphase in die Regeneratorsäule (8), und eine Leitung für mageres Absorbens (4), welche die Entspannungsmittel mit dem Wärmetauscher (7) verbindet,
dass ein Heißdampfkühler (36) zwischen dem Verdichter (34) und der Regeneratorsäule (8) angeordnet ist, in welchem Heißdampfkühler (36) der verdichtete Dampf mit Dampf gekühlt und gesättigt wird durch Zuführen von Wasser, und dass eine Leitung (38) von den Trennmitteln (14, 15, 16, 17, 18) vorgesehen ist, um Wasser von den Trennmitteln zum Heißdampfkühler (36) zu führen.

8. Regenerator nach Anspruch 7, wobei die Entspannungsmittel (31, 32) ein Entspannungsventil (31) und einen Entspannungsbehälter (32) umfassen.

9. Anlage zum Abscheiden von CO₂ aus einem CO₂-enthaltenden Gas, umfassend Mittel zum Zuführen eines flüssigen mageren Absorbens und des CO₂-enthaltenden Gases in einen Absorber, in welchem das Absorbens und das CO₂-enthaltende Gas veranlasst werden, im Gegenstrom zu fließen, um einen CO₂-armen Gasstrom und ein gesättigtes Absorbens herzustellen, Mittel zum Freisetzen des CO₂-armen Gasstroms in die Umgebung und Mittel zum Entnehmen des gesättigtes Absorbens und um das gesättigte Absorbens einem Regenerator nach Anspruch 7 zuzuführen.

10. Anlage nach Anspruch 9, wobei die Entspannungsmittel (31, 32) ein Entspannungsventil (31) und einen Entspannungsbehälter (32) umfassen.

## Revendications

1. Procédé pour régénérer un absorbant riche contenant du CO₂ absorbé afin d'obtenir un absorbant régénéré ou pauvre, et du CO₂, le procédé comprenant les étapes suivantes:
a) introduire un courant d'absorbant riche dans une colonne de régénération (8), dans laquelle l'absorbant s'écoule vers le bas et à contre-courant avec la vapeur générée en chauffant l'absorbant pauvre dans un rebouilleur (11) à la base de la colonne de régénération (8);
b) soutirer le CO₂ libéré et la vapeur à partir du sommet de la colonne (8), et séparer le CO₂ soutiré et la vapeur afin d'obtenir un courant de CO₂ qui est éliminé, et de l'eau condensée qui est recyclée dans la colonne de régénération (8);
c) soutirer l'absorbant pauvre, ou régénéré, à partir de la base de la colonne (8);
d) détendre l'absorbant pauvre soutiré afin de produire une phase gazeuse qui est comprimée et réintroduite dans la colonne de régénération (8), et une phase absorbante pauvre liquide;
e) chauffer l'absorbant riche par un premier échange de chaleur avec l'absorbant pauvre détendu liquide;
f) chauffer l'absorbant riche après l'échange de chaleur avec l'absorbant pauvre par un échange de chaleur avec un agent chauffant qui présente une température d'entrée inférieure à 130°C; et
g) introduire l'absorbant riche chauffé dans la colonne de régénération (8).

2. Procédé selon la revendication 1, dans lequel la phase gazeuse comprimée est mélangée avec de l'eau afin de refroidir et de saturer la phase gazeuse avec de la vapeur avant d'être introduite dans la colonne de régénération (8).

3. Procédé selon la revendication 2, dans lequel la phase gazeuse comprimée est refroidie à une température comprise entre 120°C et 130°C avant d'être introduite dans la colonne de régénération (8).

4. Procédé pour capturer du CO₂ à partir d'un gaz contenant du CO₂, comprenant l'introduction d'un absorbant liquide pauvre et du gaz contenant du CO₂ dans un absorbeur (3) dans lequel le gaz contenant du CO₂ est entraîné à s'écouler à contre-courant par rapport à l'absorbant pauvre afin de produire un absorbant riche et un courant de gaz épuisé en CO₂, libérer le gaz épuisé en CO₂ dans les environs, et soutirer l'absorbant riche à partir de l'absorbeur (3), dans lequel l'absorbant riche est régénéré afin d'obtenir un courant de CO₂ et un absorbant pauvre selon le procédé de la revendication 1.

5. Procédé selon la revendication 4, dans lequel la phase gazeuse comprimée est mélangée avec de l'eau afin de refroidir et de saturer la phase gazeuse avec de la vapeur avant d'être introduite dans la colonne de régénération (8).

6. Procédé selon la revendication 5, dans lequel la phase gazeuse comprimée est refroidie à une température comprise entre 120°C et 130°C avant d'être introduite dans la colonne de régénération (8).

7. Régénérateur pour un absorbant liquide pour du CO₂, comprenant une colonne de régénération (8), une ligne d'absorbant riche (5) pour introduire un absorbant riche dans la colonne de régénération (8), des moyens de soutirage (10) pour soutirer l'absorbant pauvre à partir du pied de la colonne de régénération (8), un rebouilleur (11) pour chauffer une partie de l'absorbant soutiré avant sa réintroduction dans la colonne de régénération afin de produire de la vapeur qui est réintroduite dans la colonne, une ligne d'absorbant pauvre (4) pour recycler une partie de l'absorbant soutiré par les moyens de soutirage (10) vers un absorbeur, un échangeur de chaleur (7) pour chauffer l'absorbant riche par un échange avec l'absorbant pauvre soutiré, et un échangeur de chaleur (20) pour chauffer additionnellement l'absorbant riche chauffé par un échange avec une source de chaleur à basse température avant que le gaz riche pénètre dans le régénérateur, une ligne de soutirage de gaz (9) pour soutirer le CO₂ et la vapeur à partir du sommet de la colonne de régénération, et des moyens de séparation (14, 15, 19, 45) pour séparer le gaz soutiré à partir du sommet de la colonne de régénération en un courant de CO₂ qui est exporté à partir du régénérateur, et en eau qui est recyclée vers la colonne de régénération (8), **caractérisé en ce qu'**il comprend en outre des moyens de détente (31, 32), une ligne de soutirage de vapeur (33) qui relie lesdites moyens de détente à un compresseur (34) pour comprimer une phase gazeuse soutirée, une ligne (37) pour injecter la phase gazeuse comprimée dans la colonne de régénération (8), et une ligne d'absorbant pauvre (4) qui relie les moyens de détente à l'échangeur de chaleur (7),
et **en ce qu'**un désurchauffeur (36) est agencé entre le compresseur (34) et la colonne de régénération (8), désurchauffeur (36) dans lequel la vapeur comprimée est refroidie et saturée avec de la vapeur par introduction d'eau, et **en ce qu'**une ligne (38) est prévue à partir des moyens de séparation (14, 15, 16, 17, 18) pour conduire l'eau des moyens de séparation jusqu'au désurchauffeur (36).

8. Régénérateur selon la revendication 7, dans lequel les moyens de détente (31, 32) comprennent une soupape de détente (31) et un récipient de détente (32).

9. Installation pour capturer du CO₂ à partir d'un gaz contenant du CO₂, comprenant des moyens pour introduire un absorbant liquide pauvre et le gaz contenant du CO₂ dans un absorbeur dans lequel l'absorbant et le gaz contenant du CO₂ sont entraînés à s'écouler à contre-courant afin de produire un écoulement de gaz épuisé en CO₂ et un absorbant riche, des moyens pour libérer l'écoulement de gaz épuisé en CO₂ dans les environs, et des moyens pour soutirer l'absorbant riche et pour introduire l'absorbant riche dans un régénérateur selon la revendication 7.

10. Installation selon la revendication 9, dans laquelle les moyens de détente (31, 32) comprennent une soupape de détente (31) et un récipient de détente (32).
